# FASCICULE DE BREVET EUROPEEN

(11) **EP 0 402 382 B1**
(45) Date de publication et mention de la délivrance du brevet: **19.05.1993**
(21) Numéro de dépôt: 89902793.2
(22) Date de dépôt: 20.02.1989
(51) Int. Cl.: B65G 1/127

(54) **APPAREIL D'ETAGERES ROTATIVES POUR MEUBLES**
VORRICHTUNG FÜR UMLAUFREGALSCHRÄNKE
ROTARY SHELF APPARATUS FOR FURNITURE

(30) Priorité: 18.02.1988 FR 8801976
(43) Date de publication de la demande: 19.12.1990
(73) Titulaire: WAHL, Colette, F-75008 Paris (FR)
(72) Inventeur: WAHL, Colette, F-75008 Paris (FR)
(74) Mandataire: Plaçais, Jean-Yves
(86) Numéro de dépôt international: FR8900064
(87) Numéro de publication internationale: WO8907566

(56) Documents cités:
- US-A- 3 321 260
- US-A- 3 770 105
- US-A- 4 312 550

## Description

La présente invention concerne un dispositif d'étagères rotatives de faible encombrement pour être logé dans des meubles.

Ces appareils, habituellement construits à usage industriel ou administratif, sont montés sur de solides bâtis et le mécanisme construit sans souci de place.

La dispositif selon l'invention permet d'en réduire l'épaisseur de façon importante en supprimant la nécessité d'un bâti porteur, certains assemblages et en agençant les organes de sorte que la chaîne sur laquelle sont suspendus les bras qui portent les étagères, soit rapprochée tout contre la paroi du meuble.

Il comporte à cet effet de fines plaques de métal coulé qui présentent deux nervures en arc de cercle, concentriques, formant une coulisse, un bossage excentré par rapport à cet arc de cercle qui supporte les pignons de chaîne et deux rainures verticales parallèles creusées respectivement de chaque côté du bossage, écartées l'une de l'autre de façon à être situées en face de chacun des brins de la chaîne qui s'engrène sur les pignons. Dans ces rainures s'encastrent des profilés en U qui coiffent la chaîne et la guident dans son trajet rectiligne vertical en recevant les galets fixés sur ses maillons.

Par ailleurs, une cavité est formée au centre de la couronne dentée des pignons de chaîne afin que le bossage sur lequel ils sont montés s'y emboîte permettant de les pousser tout contre la face des plaques support

Cette économie de moyens, conjuguée à la facilité de moulage des plaques support dont les reliefs, très simples, reproduisent le dispositif de contrôle de l'horizontale des étagères ( Cf. Anders US 3 321 260 col.6 lignes 40-60 ), procurent un gain important sur l'encombrement et le coût de fabrication.
La fig. 1 représente, en coupe, le pignon en position rapprochée de la plaque support, monté sur le bossage dont une partie est emboîtée dans l'évidement de sa couronne dentée.
La fig. 2 représente, en perspective éclatée, la plaque support et le pignon lui faisant face.
La fig. 3 montre la configuration de la face de la plaque support et, en perspective éclatée, le positionnement des organes du dispositif selon l'invention.

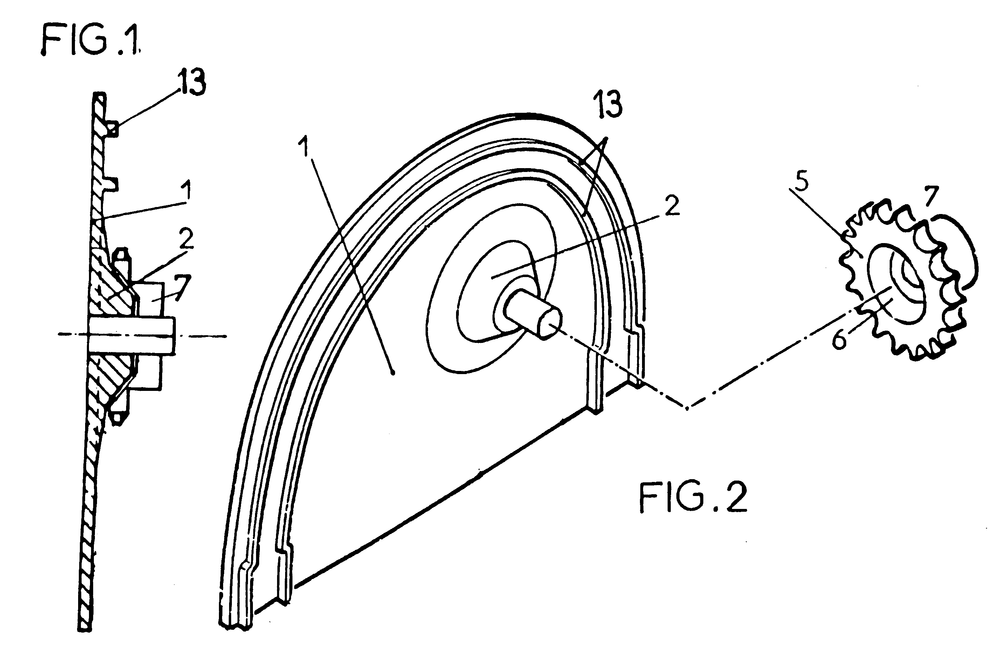

L'on voit, sur la fig. 2, la couronne dentée 5 du pignon 7 creusée d'un évidement 6 de forme et dimension appropriée à permettre au bossage 2 de s'y emboîter lorsque le pignon 7 est poussé contre la plaque support 1.

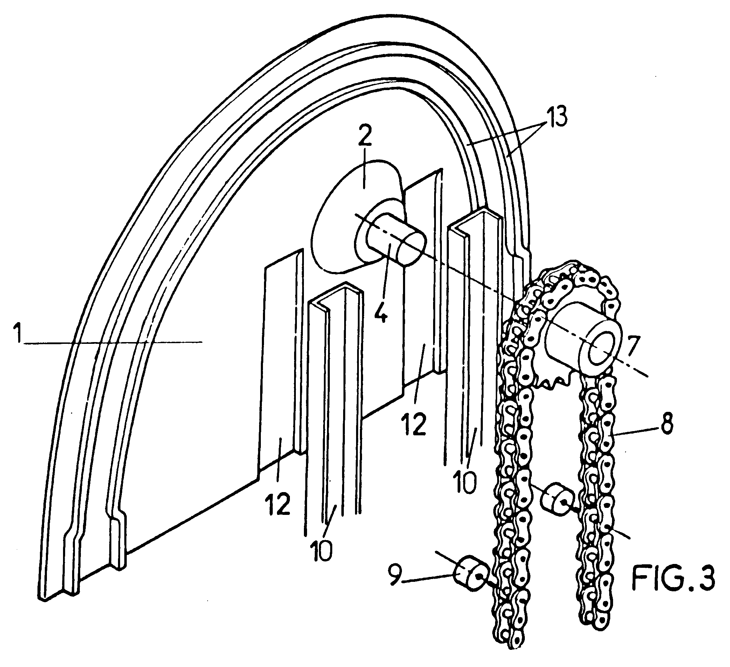

La fig. 3 représente la plaque support 1 avec ses deux nervures 13 en arc de cercle qui forment une coulisse, son bossage 2 excentré par rapport à cet arc de cercle et ses rainures 12. Les profilés 10 qui s'encastrent dans les rainures 12 coiffent la chaîne 8 et la guident en recevant les galets 9 montés sur de petits goujons qui traversent l'axe creux de ses maillons.

Le dispositif selon l'invention est particulièrement destiné à équiper des meubles.

## Revendications

1. Dispositif pour supporter des étagères rotatives comportant des plaques de métal coulé supportant les pignons de chaîne, caractérisées en ce qu'elles présentent sur l'une de leurs faces deux nervures concentriques (13) en arc de cercle, un bossage (2) excentré par rapport à cet arc de cercle, et deux rainures parallèles verticales (12) disposées respectivement de chaque côté du bossage.

2. Dispositif selon la revendication 1 caractérisé en ce que les pignons de chaîne (7) que porte le bossage (2) des plaques support (1) présentent une cavité (6) au centre de leur couronne dentée (5) pour que le bossage (2) s'y emboîte permettant de pousser le pignon (7) contre la face des plaques (1).

3. Dispositif selon l'une quelconque des revendications précédentes caractérisé en ce que des profilés (10) sont encastrés, en position, dans les rainures (12), se trouvant ainsi placés entre la plaque support (1) et la chaîne (8).

## Claims

1. Device for supporting rotary shelves comprising plates of cast metal supporting the sprockets, characterised in that these plates have, on one of their faces, two concentric ribs (13) in the shape of a circular arc, a boss (2) located out of centre with respect to this circular arc, and two vertical parallel grooves (12) arranged respectively on each side of the boss.

2. Device according to Claim 1, characterised in that the chain sprockets (7) borne by the boss (2) of the support plates (1) have a cavity (6) at the centre of their toothed crown (5) for the boss (2) to nest therein enabling the sprocket (7) to be pushed against the face of the plates (1).

3. Device according to any one of the preceding claims, characterised in that sections (10) are fitted, in position, into the grooves (12), which sections are thus placed between the support plate (1) and the chain (8).

## Patentansprüche

1. Vorrichtung zum Stützen von drehbaren Etagengestellen mit Gußmetallplatten, die die Kettenwirbel stützen, dadurch gekennzeichnet, daß sie auf einer ihrer Seiten zwei konzentrische, kreisbogenförmige Rippen (13), einen bezüglich dieses Kreisbogens exzentrischen Nabenwulst (2) und zwei parallele, senkrechte Rillen (12) aufweisen, die zu beiden Seiten des Nabenwulstes angeordnet sind.

2. Vorrichtung nach Anspruch 1, dadurch gekennzeichnet, daß die Kettenwirbel (7), die der Nabenwulst (2) der Stützplatten (1) trägt, in der Mitte ihres Zahnkranzes (5) eine Höhlung (6) aufweisen, so daß sich der Nabenwulst (2) dort einfügt, wodurch der Kettenwirbel (7) gegen die Seite der Platten (1) gedrückt werden kann.

3. Vorrichtung nach einem der vorhergehenden Ansprüche, dadurch gekennzeichnet, daß in den Rillen (12) Profilschienen (10) in Stellung eingelassen sind und sich somit zwischen der Stützplatte (1) und der Kette (8) befinden.
